# EUROPÄISCHE PATENTSCHRIFT

(11) **EP 0 831 351 B1**
(45) Veröffentlichungstag und Bekanntmachung des Hinweises auf die Patenterteilung: **16.07.2003**
(21) Anmeldenummer: 97115990.0
(22) Anmeldetag: 15.09.1997
(51) Int. Cl.: G02B 26/08, H01L 41/02

(54) **Kippvorrichtung**
Tilting device
Dispositif de basculement

(30) Priorität: 19.09.1996 DE 19638262
(43) Veröffentlichungstag der Anmeldung: 25.03.1998
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Reuter, Martin, 85221 Dachau (DE); Richter, Stefan, 07646 Stadtroda (DE)

(56) Entgegenhaltungen:
- EP-A- 0 726 479
- WO-A-90/01715
- DE-A- 19 519 161
- DE-C- 4 405 501
- US-A- 5 159 225

## Beschreibung

Die Erfindung betrifft eine Kippvorrichtung gemäß dem Oberbegriff des ersten Patentanspruchs.

Derartige Kippanordnungen sind aus dem bekannten Stand der Technik reichlich bekannt. Sie dienen dazu, einem auf sie auffallenden Lichtstrahl definiert um einen gewissen Winkel abzulenken. Man unterscheidet insbesondere 1-achsige und 2-achsige Kippspiegel.

Während einachsige Kippspiegel heute ein marktübliches Produkt mit großer technischer Variation sind, sind zweiachsige Kippspiegel, welche heute zwar ebenfalls Stand der Technik und auf dem Markt erhältlich sind, noch bedeutenden technischen Einschränkungen unterworfen.

Aus der US-PS 4,708,420 ist eine Kippspiegelanordnung bekannt, welche zum Scannen verwendet wird. Dabei ist der Abtastspiegel über Biegegelenke mit piezokeramischen Antriebselementen verbunden, welche parallel zur Spiegeloberfläche angeordnet sind. Damit die piezokeramischen Antriebselemente den Spiegel um einen großen Winkel kippen können, muß diese Anordnung sehr groß sein. Dies resultiert aus der geringen Verbiegung der piezokeramischen Antriebselemente, welche proportional zur Länge dieser Elemente ist. Damit ist diese Anordnung nicht dazu geeignet kleine Spiegel um einen großen Winkelbereich zu kippen, wenn der Antriebsmechanismus hinter dem Kippspiegel auf die Dimension der Spiegelfläche begrenzt sein soll.

Aus der US-PS 4,383,763 ist eine Kippspiegelanordnung bekannt, bei welchem der Spiegel auf einem Punkt gelagert ist und über piezoelektrische Keramiken bewegt wird. Auch hier müssen die Dimensionen des Spiegel sehr groß sein, wenn der Kippspiegel um mindestens 1° gekippt werden soll.

Aus der US-PS 4,660,941 ist eine Kippspiegelhalterung bekannt, bei welchem die Kippspiegelbewegung durch piezoelektrische Elemente erreicht wird und die piezoelektrischen Elemente wirken dabei über Hebel auf den Spiegel. Auch diese Anordnung ist nicht dazu geeignet einen kleinen Spiegel um mindestens 1° zu kippen.

Aus der US-PS 5,170,277 ist ein piezoelektrischer Strahlreflektor bekannt, bei welchem der Spiegelkörper direkt auf dem piezoelektrischen Element befestigt ist. Dies hat den Nachteil, daß der Spiegel bei einer Kippung keinen definierten Drehpunkt besitzt.

Aus der US-PS 4,691,212 ist ein piezoelektrischer Strahlreflektor bekannt, welcher in einer Scananordnung verwendet wird. Der Nachteil dieser Anordnung ist, daß ein bestimmter Ablenkwinkel nicht starr gehalten werden kann, wenn der Drehpunkt fest liegen soll.

Aus der DE 195 19 161 ist eine piezoelektrische Abtastvorrichtung bekannt, bei welcher ein Paar von piezoelektrischen Plattenelementen, die sich transversal zu einer Basis erstrecken, an einem Ende auf ein Aufbauelement gemeinsam so einwirken, daß dieses Aufbauelement kippt. Es sind somit für eine Kippachse zwei sich zusammen bewegende Plattenelemente notwendig, welche sich zur Kippung entgegengesetzt bewegen müssen. Die Plattenelemente greifen dazu an unterschiedlichen Stellen eines Stabes unterhalb des Aufbauelementes an. Für eine Kippung um eine dazu senkrechte Kippachse sind zwei weitere Plattenelemente notwendig.

Weifere, für den stand der Technik relevante kippvorrichtungen sind aus der US-PS 5,129,225 bekannt.

Es ist die Aufgabe der Erfindung eine Kippvorrichtung zu schaffen, bei welcher ein Aufbauelement mit höchster Präzision um Winkel bis zu 5° gekippt werden kann.

Diese Aufgabe wird erfindungsgemäß durch den kennzeichnenden Teil des ersten Patentanspruches gelöst.

Die erfindungsgemäße Kippvorrichtung, welche eine Kippung um mindestens eine Achse ermöglicht, besitzt mindestens einen Kippkörper und mindestens einen Basiskörper, wobei unterhalb eines Kippkörpers mindestens eine längliche Halterungsvorrichtung angeordnet ist. Am Basiskörper sind mindestens zwei rechteckförmige Stabilisierungskörper angebracht, welche zueinander versetzt an der Halterungsvorrichtung des Kippkörpers angreifen. Zwischen Halterungsvorrichtung und Stabilisierungskörpern, sind Verbindungskörper angeordnet, welche in unterschiedlicher Höhe an der Halterungsvorrichtung angreifen.

Das erfinderische an dieser Kippvorrichtung ist, daß bei der Bewegung um eine Kippachse durch Lage- oder Formänderung eines der mindestens zwei Stabilisierungskörper der andere Stabilisierungskörper starr an einem Ort verbleibt. Der eine Stabilisierungskörper vollführt eine Lage- oder Formänderung und sorgt so über den an ihm angebrachten Verbindungskörper für eine Kippbewegung des Kippkörpers relativ zum Basiskörper, während der andere Stabilisierungskörper starr an und in seiner Position verbleibt und so für eine definierte Dreh- bzw. Kippachse für die Kippvorrichtung sorgt.

Dabei können sich die beiden Stabilisierungskörper direkt gegenüberstehen und in einer gemeinsamen Achse mit der Halterungsvorrichtung liegen, wobei sie aber in unterschiedlicher Höhe an der Halterungsvorrichtung angreifen (z.B. einachsiger Kippspiegel). Sie können aber auch zueinander in einem anderen Winkel stehen. Eine erhöhte Stabilität wird durch den Einsatz von sich gegenüberliegenden Stabilisierungskörpern erreicht.

Bei der Kippvorrichtung erfolgt die Kippbewegung somit nur an einem Bauteil (Stabilisierungskörper), was den Aufbau der gesamten Kippvorrichtung sehr einfach gestalten läßt und auch kostengünstig.

Wenn das die Kippbewegung mitmachende Bauteil z.B. ein Biegeaktuator ist, so läßt sich die Kippvorrichtung aus einer sehr kleinen Bauteileanzahl so aufbauen, daß die Kippbewegung von außen am Biegeaktuator eingeleitet werden kann.

Der Biegeaktuator kann dabei je nach Verwendungszweck der Kippvorrichtung nach dem hydraulischen, pneumatischen oder elektrischen Prinzip arbeiten, wobei diese Aufzählung lediglich beispielhaft sein soll. Vorteilhafterweise ist er aber ein piezokeramischer Biegeaktuator, welcher über eine elektrische Leitung angesteuert wird und sich je nach dem elektrischen Zustand in dieser Leitung zur einen oder zur anderen Seite verbiegt. Liegt keine oder eine konstante Spannung an ihm an, d.h. es fließt kein Strom durch die Leitung, so ist er starr genug um als Stabilisierungskörper zu dienen, bzw. für den anderen Stabilisierungskörper die Drehachse für den Kippkörper zu erzeugen.

D.h., ein derartiger Stabilisierungskörper ist in einer horizontalen Achse biegeelastisch und senkrecht dazu in der anderen horizontalen Achse steif.

Der Verbindungskörper zwischen dem Stabilisierungskörper und der Halterungsvorrichtung des Kippkörpers hingegen ist vorteilhafterweise in der Bewegungsachse steif und senkrecht dazu biegeelastisch. Dadurch kann er die Bewegung des Stabilisierungskörpers auf die Halterungsvorrichtung übertragen, ohne daß er einer Kippbewegung in der dazu senkrechten Richtung einen zu großen Widerstand entgegensetzt.

Diese Eigenschaft weisen insbesondere Verbindungskörper auf, welche plattenförmig sind und zwischen Halterungsvorrichtung und Stabilisierungskörpern eine Verdünnung aufweisen, was letztendlich zu der Ausbildung des Verbindungskörpers als spielfreies Kardangelenk und insbesondere als Festkörpergelenk führt.

Es ist vorteilhaft, wenn die zwei (vorteilhafterweise) rechteckförmigen Stabilisierungskörper zueinander in einem Winkel von 90° angeordnet sind. Dann kann die Kraftübertragung bzw. die Bewegung des einen Stabilisierungskörpers und durch die Vermittlung der Verbindungskörper an der Halterungsvorrichtung des Kippkörpers letztendlich diese so gekippt werden, daß die Kippbewegung in der am steifesten ausgeführten Achse des anderen Stabilisierungskörpers erfolgt.

Ordnet man zwei weitere rechteckförmige Stabilisierungskörper zueinander in einem Winkel von vorteilhafterweise 90° an, sodaß die Stabilisierungskörper jeweils einen Winkel von 90° aufweisen, erhält man eine Kippvorrichtung, welche um zwei Achsen gekippt werden kann.

Dabei ist es vorteilhaft, wenn die gegenüberliegenden Stabilisierungskörper durch die Verbindungskörper bewegungsmäßig gekoppelt sind. Das vergrößert die Steifigkeit der Kippanordnung erheblich und dient so dem sichereren Betrieb der Kippvorrichtung.

Wie vorab schon erwähnt ist es vorteilhaft, wenn die Stabilisierungskörper als Biegeaktuatoren ausgebildet sind. Dadurch erreicht man eine Minimierung der zum Bau der Kippvorrichtung benötigten Bauteile. Insbesondere die Verwendung von Piezo-Aktuatoren als Stabilisierungskörper ist dabei vorteilhaft.

Da viele Biegeaktuatoren und teilweise auch andere Stabilisierungskörper im Zeitverlauf ohne äußere Einflüsse eine Lageänderung aufweisen, ist die Verwendung eines Positionsmeßsystem für jede Kippachse sehr vorteilhaft.

Insbesondere für die Realisierung möglichst kleiner Kippvorrichtungen besteht ein solches Positionsmeßsystem vorteilhafterweise aus einem Induktivmeßsystem, welches in sehr einfacher weise aus einer Spule mit oder ohne Eisenkern bestehen kann, wenn der Kippkörper zumindest im Meßbereich dieses Positionsmeßsystems magnetische Eigenschaften aufweist.

Die erfindungsgemäße Kippvorrichtung eignet sich für alle Anwendungen, bei welcher es zumindest auf eine einachsige Bewegung über einen relativ kleinen Kippwinkel (< 10°, vorteilhafterweise < 5°) bei relativ hohen Kippfrequenzen ankommt. Die Anwendungen umfassen Abtastungen, Belichtungen, Materialabtragungen, usw..

Sehr vorteilhaft ist insbesondere auch die Ausgestaltung der Verbindungskörper, welche bei einer ausgezeichneten Steifigkeit zur Kraftübertragung in der einen Achse durch die Plattendicke und die seitlichen Materialausnehmungen eine hervorragende Elastizität senkrecht zur Achse mit der hohen Steifigkeit besitzen. Diese Verbindungskörper mit Festkörpergelenken erlauben dadurch sehr schnelle einachsige achsiale Bewegungen, ohne Bewegungen in der dazu senkrecht stehenden Achse zu behindern. Sie lassen sich dabei leicht und preiswert herstellen, indem sie aus einer Platte/Folie einfach ausgestanzt werden.

Insbesondere kann man mit der erfindungsgemäßen Kippvorrichtung große Segmentarrays aufbauen, welche aus einer flächenhaften Anordnung von vielen der erfindungsgemäßen Kippvorrichtung bestehen, da der Antriebsmechanismus vollständig unterhalb der zu kippenden Fläche angeordnet ist.

Auf der zu kippenden Fläche können dabei passive Bauteile (z.B. Spiegelflächen, usw.) als auch aktive Bauteile (z.B. Laserdioden) angeordnet sein.

Die Erfindung wird im folgenden in beispielhafter weise anhand von Zeichnungen erläutert, wobei weitere wesentliche Merkmale sowie dem besseren Verständnis dienende Erläuterung und Ausgestaltungsmöglichkeiten des Erfindungsgedankens beschrieben sind.

Dabei zeigen:
- Figur 1: einen Schnitt durch die erfindungsgemäße Kippvorrichtung; und
- Figur 2: eine Schrägansicht der Kippvorrichtung aus Figur 1.

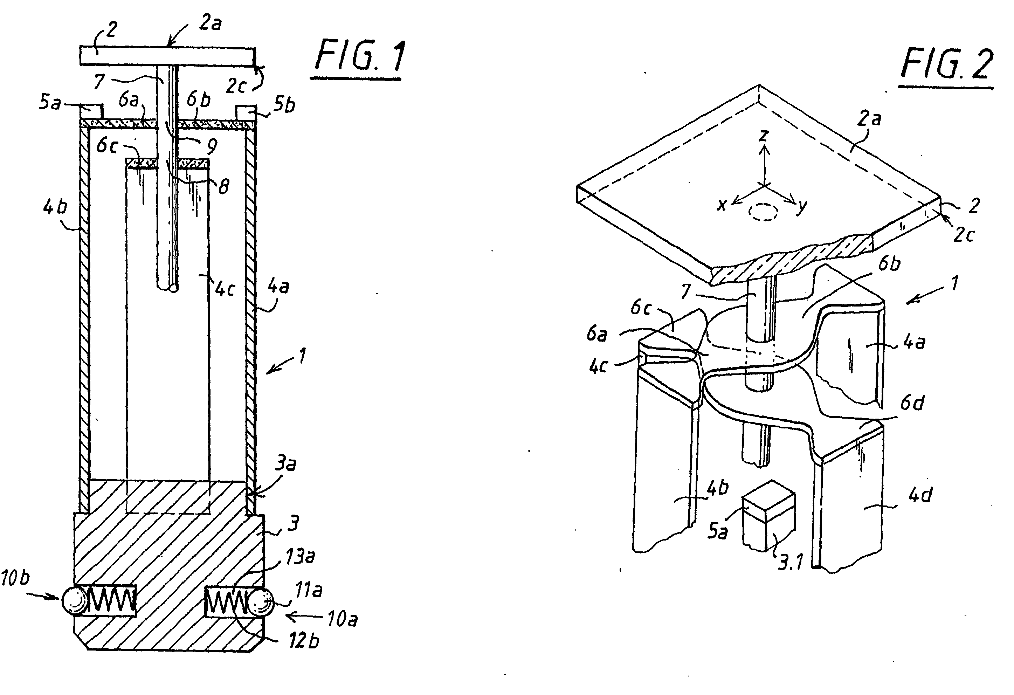

Die in den Figuren 1 und 2 dargestellte Kippvorrichtung (1) besteht aus einem Basiskörper (3) und einem Kippkörper (2), wobei letzterer auf seiner Oberseite (2a) verspiegelt ist, so daß es sich bei der in den Figuren dargestellten Vorrichtung (1) letztendlich um eine Kippspiegelvorrichtung (1) handelt, welche im dargestellten Beispiel um zwei Achsen gekippt werden kann. Die Figur 1 zeigt einen Schnitt durch die Kippspiegelvorrichtung (1), welcher genau durch eine der beiden Kippachsen geht.

An dem oberen Teil des Basiskörpers (3) befinden sich Ausnehmungen, deren Tiefe größer ist als die an ihrer Innenseite (3a) befestigten (z.B. eingeklebten) Stabilisierungskörper (4a, 4b, 4c, 4d). Die Tiefe dieser Ausnehmungen ist mindestens um die Verbiegefähigkeit der Stabilisierungskörper (4a, 4b, 4c, 4d) im vorbestimmten Winkelbereich größer, damit die Stabilisierungskörper (4a, 4b, 4c, 4d) bei maximaler Kippung der Kippkörpers (2) und auch der Kippkörper (2) selber niemals über den äußeren Rand des Basiskörpers (3) hinausragen.

An den Enden der Stabilisierungskörper (4a, 4b, 4c, 4d) sind zwei Verbindungskörper (6a, 6b; 6c, 6d) befestigt (z.B. aufgeklebt), welche jeweils zwei der Stabilisierungskörper (4a, 4b; 4c, 4d) (und zwar die sich gegenüberstehenden) miteinander verbinden.

Im unteren Bereich des Basiskörpers (3) befinden sich Rasteinrichtungen (10a, 10b) zum Einstecken in entsprechend geformte Rasthalterungen eines Tragekörpers (in der Figur nicht dargestellt). Dieser Tragekörper kann zum Beispiel dazu dienen mehrere der Kippvorrichtungen (1) aufzunehmen und diesen eine definierte Position zueinander sicherzustellen.

Die Rasteinrichtungen (10a, 10b) in der beispielhaft dargestellten Kippvorrichtung (1) bestehen im wesentlichen aus einer Kugel (11a) in einer Ausnehmung (13a) des Basiskörpers (3) , , welche von einer Feder (12a) nach außen gedrückt wird. Die Ausnehmung (13a) besitzt an ihrem äußeren Rand eine Verjüngung, sodaß die Feder (12a) die Kugel (11a) nicht aus der Ausnehmung (13a) hinausdrücken kann. Die Ausnehmung (13a) hat aber auch einen inneren Durchmesser, welcher es der Kugel (11a) gestattet ganz in die Ausnehmung (13a) hineinzutauchen.

Die Rasteinrichtung (10a, 10b) wird dazu benutzt, einen elektrischen Kontakt für jeden der Stabilisierungskörper (4a, 4b, 4c, 4d) zu jeweils einer Ansteuerungseinrichtung für Piezoaktuatoren sicherzustellen. Weitere in der Figur nicht dargestellte Rasteinrichtungen stellen die Verbindung der Sensoren (5a, 5b) zu einem Rechnersystem sicher, welches auf die Ansteuerungseinrichtungen der Piezoaktuatoren (4a, 4b, 4c, 4d) regelnd und steuernd Einfluß nehmen kann.

Der dargestellte zweiachsige Kippantrieb des Spiegels auf dem Kippkörper (2) ermöglicht den Bau einer Spiegelgröße von größer als 3 x 3 mm bei einem Kippwinkel von mehr als 2° in jeder Richtung bei einer Winkelauflösung in der Größenordnung von mindestens Plus/Minus einer Sekunde.

Die Kippvorrichtung (1) zeichnet sich durch eine gleichmäßige Winkelauflösung für beide Kippachsen aus und besitzt auf Grund der Verwendung von piezoelektrischen Biegeaktuatoren als Stabilisierungskörper (4a, 4b, 4c, 4d) eine Einstellzeit von ungefähr 1/10 sec.

Beispielhaft erhält man bei Kippwinkeln von 2° einen 175 µm großen Höhenhub an der Spiegelkante (2c). Eine Winkelauflösung von einer Sekunde entspricht bei einer Baugröße der Spiegeloberfläche (2a) von 10 * 10 mm von ungefähr 24 nm.

Diese Werte sind sehr klein und stellen hohe Anforderungen an die Spielfreiheit der Stabilisierungskörper (4a, 4b, 4c, 4d in der Figur nicht sichtbar und deshalb nicht dargestellt), die Stabilität der Ansteuerung der die Kippbewegung ausführenden Anordnung (hier piezoelektrischer Biegeaktuator) und an die Auflösung eines Positionsmeßsystem (5a, 5b) bei der Erfassung eines Ist-Wertes.

Die dargestellte Kippvorrichtung (1) mit Spiegel hat den außerordentlichen Vorteil, daß die Herstellung bei absoluter Kostenminimierung erfolgen kann und das der laterale Platzbedarf nicht größer ist als die Spiegelfläche (2a).

Als Stabilisierungskörper (1) und gleichzeitig als Stellelemente finden in der Kippvorrichtung Piezoaktuatoren Anwendung.

Die Lageänderung der Stabilisierungskörper (1) wird durch ein hochempfindliches, induktiv arbeitendes Positionsmeßsystem (5a, 5b) erfaßt und kontrolliert.

Die Kippvorrichtung (1) wird über ein Rechnersystem angesteuert, mit welchem sie über diverse Kabel verbunden ist. Zu jedem Piezoaktuator (4a, 4b, 4c, 4d) führt ein elektrisches Kabel, um den Piezoaktuator (4a, 4b, 4c, 4d) bei Bedarf zu einer Lageänderung zu veranlassen.

Außerdem führt jeweils ein Signalkabel von jedem Positionsmeßsystem (5a, 5b) zu dem Rechnersystem, welches mit einer Meßwerterfassungsvorrichtung für induktive Meßsysteme ausgestattet ist.

Die aus den Meßwerten der einzelnen Positionsmeßsysteme (5a, 5b) errechneten Daten werden mit den Sollwerten verglichen, welche nach einer Formel errechnet werden oder in einer Tabelle abgelegt sind und ermöglichen somit eine Lageermittlung des Kippkörpers (2). Ergibt sich bei der Berechnung, daß der Kippkörper (2) nicht oder nicht mehr in der gewünschten Position sich befindet, so erzeugt das Rechnersystem ein Signal für die Ansteuerungseinrichtung des jeweiligen Piezoaktuators (4a, 4b, 4c, 4d), welche die Ansteuerung des jeweiligen Piezoaktuators (4a, 4b, 4c, 4d) dann so korrigiert, daß der Kippkörper (2) in die gewünschte Lage bewegt wird.

Da die zu bewegenden Massen bei der in der Figur 1 dargestellten erfindungsgemäßen Kippvorrichtung (1) gering sind, eignen sich hier piezokeramische Biegeaktuatoren (4a, 4b, 4c, 4d) hervorragend für diese Aufgabe. Der Nachteil der relativ geringen Steifigkeit bzw. Stabilität der Biegeaktuatoren (4a, 4b, 4c, 4d) in Biegerichtung kommt bei der ausgeführten Konstruktion nicht als wesentliche Einschränkung zum tragen. Im Gegenteil zeichnet sich die in der Figur 1 dargestellte Kippvorrichtung (1) durch eine unerwartet hohe Stabilität aus.

Gute Biegeaktuatoren (4a, 4b, 4c, 4d) bringen den oben beispielhaft angegebenen benötigten Hub von 175 µm bereits bei Baulängen von ca. 20 mm.

Aus Platzgründen wirken die als Bieger dienenden Stabilisierungskörper (4a, 4b, 4c, 4d) nicht direkt in vertikaler Richtung, sondern sie sind unter dem mit dem Spiegel versehenen Kippkörper (2) plaziert und arbeiten mit horizontaler Wirkrichtung.

In jeder Bewegungsrichtung ist ein Paar von zwei parallel arbeitenden Biegern (4a, 4b, 4c, 4d) angeordnet, deren auslenkende Enden mit einem speziell geformten Federblech, welches als Verbindungskörper (6a, 6b) insbesondere zwischen den Stabilisierungskörpern (4a, 4b, 4c, 4d) und der unterhalb des Kippkörpers (2) angebrachten, stabförmigen Halterungsvorrichtung (7) dient, miteinander verbunden sind, so daß sich eine Parallelführung ergibt. Das Material eines Verbindungskörpers (6a, 6b) kann aus den verschiedensten Werkstoffen (z.B. Federstahl, Hart- oder Weichplastik, usw.) bestehen.

Die von den Biegern (4a, 4b, 4c, 4d) injiziert horizontale Translationsbewegung benötigt bei der Erzeugung der Kippbewegung des Kippkörpers (2) relativ zum Basiskörper (3) eine gewisse Hebellänge zwischen der Wirkebene der translatorischen Bewegung und der bezüglich der Translation festen Kippachse.

Bei der Betrachtung der Kippvorrichtung (1) in den Figuren ist zu beachten, daß die Stabilisierungskörper (4a, 4b, 4c, 4d) bei der dargestellten Vorrichtung eine Doppelaufgabe haben. Einerseits sorgen sie für die Bewegung des Kippkörpers (2) und sind somit Antriebselemente. Andererseits dienen sie als Halterungen für die Bewegung des Kippkörpers (2) in der anderen Kippachse und sind dann Fixier-, Lagerungs- oder Lagestabilisierungselemente.

Definiert man in der Figur 1 die Zeichnungsebene als x-z-Ebene und liegt die x-Achse parallel zur dargestellten Lage der Verbindungskörper (6a, 6b), so ragt die y-Achse senkrecht aus der Zeichnungsebene heraus.

Um eine Bewegung des Kippkörpers (2) in Richtung der x-Achse zu erreichen, wird der piezokeramische Biegeaktuatoren (4b) zur Halterungsvorrichtung (7) bewegt und der piezokeramische Biegeaktuatoren (4a) von der Halterungsvorrichtung (7) weg bzw. umgekehrt. Beide piezokeramischen Biegeaktuatoren (4a, 4b) sind gleichlang und greifen in gleicher Höhe über den sie beide verbindenden Verbindungskörper (6a, 6b) an der Halterungsvorrichtung (7) an.

Der Drehpunkt (8) liegt bei dieser Kippung unterhalb des Verbindungskörpers (6a, 6b) im Inneren der Halterungsvorrichtung (7) in Höhe des Verbindungskörpers (6c, 6d), welcher die beiden anderen piezokeramischen Biegeaktuatoren (4c, 4d) miteinander verbindet. Die beiden piezokeramischen Biegeaktuatoren (4a, 4b) dienen hierbei als Antriebselemente, während die beiden piezokeramischen Biegeaktuatoren (4c, 4d) über ihren Verbindungskörpers (6c, 6d) den Drehpunkt (8) festlegen.

Um eine Bewegung des Kippkörpers (2) in Richtung der y-Achse zu erreichen, wird der piezokeramische Biegeaktuatoren (4c) zur Halterungsvorrichtung (7) bewegt und der piezokeramische Biegeaktuatoren (4d) von der Halterungsvorrichtung (7) weg bzw. umgekehrt. Beide piezokeramischen Biegeaktuatoren (4c, 4d) sind gleichlang und greifen in gleicher Höhe über den sie beide verbindenden Verbindungskörper (6c, 6d) an der Halterungsvorrichtung (7) an.

Der Drehpunkt (9) liegt bei dieser Kippung oberhalb des Verbindungskörpers (6c, 6d) im Inneren der Halterungsvorrichtung (7) in Höhe des Verbindungskörpers (6a, 6d), welcher die beiden anderen piezokeramischen Biegeaktuatoren (4a, 4b) miteinander verbindet. Die beiden piezokeramischen Biegeaktuatoren (4c, 4d) dienen nun als Antriebselemente, während die beiden piezokeramischen Biegeaktuatoren (4a, 6d) über ihren Verbindungskörpers (6a, 6b) nun den Drehpunkt (9) festlegen.

Die Halterungsvorrichtung (7) (bzw. das Hebelelement für die beiden Freiheitsgrade) kann aber auch anders als in diesem Beispiel geformt sein und beispielsweise als ein zylindrischer, nach unten spitz zulaufender Fuß unterhalb des als Spiegelträgers verwendeten Kippkörpers (2) ausgestaltet sein.

Die Ebenen, in denen die beiden orthogonal zueinander wirkenden Translationsbewegungen der Biegeenden der Bieger (4a, 4b, 4c, 4d) wirken, können bei der erfindungsgemäßen Kippvorrichtung (1) nicht identisch sein, da die Bieger (4a, 4b, 4c, 4d) nur in einer Achsrichtung beweglich sind und daher nur spielbehaftete (gleitende) Verbindungen zwischen Biegern (4a, 4b, 4c, 4d) und Verbindungsblech bzw. Verbindungskörper (6a, 6b, 6c, 6d) in Frage kommen würden.

Daher sind zwei getrennt parallele Wirkebenen vorhanden. Die Drehpunkte (8, 9) jedes der beiden Freiheitsgrade liegt in der Wirkebene des jeweils anderen Freiheitsgrades. Die Richtung der Spiegelnormalen ist durch die Verbindungsgerade zwischen den Durchstoßpunkten der Spiegelfußachse durch die beiden Verbindungskörper (6a, 6b; 6c, 6d) gegeben.

Bei seitlicher translatorischer Verschiebung des Verbindungskörpers (6a, 6b; 6c, 6d) in einer der Wirkebenen, wird die Halterungsvorrichtung (7) des als Spiegelträger dienenden Kippkörpers (2) seitlich ausgelenkt und dabei um den Drehpunkt (8, 9) in der jeweils anderen orthogonalen Wirkebenen gekippt.

In der gerade aktiven Ebene muß daher ebenfalls ein Drehpunkt (8, 9) vorhanden sein; dies führt zu einer kardangelenkigen Ausbildung des Verbindungskörpers (6a, 6b; 6c, 6d) mit nahezu völliger Entkopplung der beiden Kippbewegungen.

Da die beiden Drehpunkte (8, 9) nicht mit der Spiegeloberfläche (2a) zusammenfallen, bewirkt jede Kippbewegung eine sehr kleine seitliche Verschiebung der Spiegeloberfläche (2a). Dies ist tolerierbar, da es sich nur um wenige 0,1 mm handelt (wenn der Kippkörper (2) eine 10*10mm große verspiegelte Oberfläche (2a) besitzt und der Kippkörper (2) um 2° in einer Richtung gekippt wird).

Es ist also in jeder Wirkebene eine kardanische Lagerung vorhanden. Die kardanische Lagerung erfolgt durch die beiden Verbindungskörper (6a, 6b; 6c, 6d), welche Kardangelenke darstellen und als Festkörpergelenke ausgeführt sind. Sie (6a, 6b; 6c, 6d) sind spielfrei ausgeführt und bestehen aus einem federnden Material (z.B. Federblech). In Anbetracht der kleinen Bewegungen des Kippkörpers (2) treten an den tordierten Stegen der Verbindungskörper (6a, 6b; 6c, 6d) nur geringe Rückstellkräfte auf.

In der Kippvorrichtung sind mindestens ein induktives Positionsmeßsysteme (5a, 5b) zur Erfassung der die Verkippung bewirkenden Translationsbewegungen in einer der beiden Kippachsen vorhanden.

Jedes der beiden Positionsmeßsysteme (5a, 5b) besteht aus einem Paar mit zwei Meßspulen für die Positionsermittlung des Kippkörpers in einer Kippachse. Die Signale der Positionsmeßsysteme (5a, 5b) werden über Kabel an ein Rechnersystem weitergeleitet, welches die Positionsinformation aus der Signaldifferenz gewinnt. Dadurch vermeidet man Drifteffekte, welche sonst daß Meßergebnis verfälschen könnten. Die Kippvorrichtung (1) ist so aufgebaut, daß beide Freiheitsgrade entkoppelt sind, sodaß sich die Kippung jeder Achse unabhängig von der Kippung der anderen Achse ermitteln und korrigieren läßt.

Die Kippvorrichtung (1) besitzt einen stabilen Aufbau mit kleinen Toleranzen durch die Verwendung jeweils zwei parallel arbeitender Stabilisierungskörper (4a, 4b, 4c, 4d) für jede Kippachse.

Der paarweise Einsatz von jeweils zwei parallel arbeitenden Stabilisierungskörper (4a, 4b, 4c, 4d) führt zu einer sehr hohen mechanischen Stabilität, einer verdoppelten Steifigkeit und einer Erhöhung der Dynamik im Vergleich zu einem Antrieb mit jeweils nur einem Piezobieger (4a, 4b, 4c, 4d).

Die sehr kompakte zweiachsige Kippvorrichtung (1) für einen optischen Ablenkspiegel (2a) zeichnet sich insbesondere dadurch aus, daß der Antrieb jedes Kippfreiheitsgrades durch ein mechanisch gekoppeltes Paar von piezoelektrischen Biegeaktuatoren (4a, 4b, 4c, 4d) realisiert ist. Die Lagerung der Kippvorrichtung erfolgt unterhalb des Kippkörpers (2) an der Halterungseinrichtung (7) in zwei Ebenen, wobei jedes der beiden Lager aus einem als spielfreies Kardangelenk wirkendes Verbindungskörper (6a, 6b, 6c, 6d) besteht.

Außerdem wird in jeder der beiden orthogonal angeordneten Kardanaufhängungen eine Translation ausgeführt, die zu einer Kippbewegung um eine in der jeweiligen anderen Ebene liegende Drehachse umgesetzt wird. Dadurch wird eine weitgehende Entkopplung der orthogonalen Kippbewegungen erreicht.

Die zwei unabhängig voneinander wirkenden hochempfindlichen induktiven Positionsmeßsysteme (5a, 5b) für jede der beiden Kippachsen erfassen die, die Kippbewegung bewirkende Größe der Translation durch Differenzbildung zweier gegenläufiger Signale. Dadurch erfolgt eine Eliminierung von Drifteffekten der Absolutwerte der Einzelsignale.

Die erfindungsgemäße Kippvorrichtung zeichnet sich auch dadurch aus, daß
- der begrenzende Kippwinkel um die x- bzw. y-Achse einen Winkel von kleiner gleich 5° besitzt;
- die Baugröße kaum eingeschränkt ist (Bei den Kippvorrichtungen nach dem Stand der Technik erfordern gewisse Kippwinkel eine gewisse Mindestbaugröße oder auch maximale Baugröße, was jeweils störend ist.);
- Baugröße der Kippspiegelanordnung ist gleich oder sogar kleiner als die Spiegelfläche, was insbesondere hinter der Spiegelfläche bei kleinen Kippspiegeln wichtig ist (d.h. mit den Spiegeln nach dem bekannten Stand der Technik sind keine hohen Packungsdichten erreichbar); und
- unkomplizierte Herstellungstechnik im Gegensatz zu den bekannten zweiachsigen Kippspiegeln.

Wie aus der Figur 1 und insbesondere aus der Figur 2 ersichtlich, besitzen die Piezoaktuatoren (4a, 4b, 4c, 4d) einen rechteckförmigen Querschnitt. Sie sind in einer Achse, ihrer Kippachse, sehr leicht biegefähig, während sie in der dazu senkrecht stehenden Achse sehr stabil sind. Die Piezoaktuatoren (4a, 4b, 4c, 4d) haben eine seitliche Ausdehnung, welche wesentlich kleiner ist als die seitliche Ausdehnung des Basiskörpers (3). Dadurch befindet sich seitlich von ihnen ein Freiraum, in welchem sich in jedem Eckbereich jeweils eine vertikale Verlängerung (3.1) (nur eine Verlängerung in Figur 2 aus Übersichtlichkeitsgründen dargestellt) des Basiskörpers (3) befindet, allerdings mit soviel Freiraum, daß die Bewegung der Piezoaktuatoren (4a, 4b, 4c, 4d) selber nicht behindert wird. Auf diesen vertikalen Verlängerungen (3.1) (nur eine Verlängerung in Figur 2 aus Übersichtlichkeitsgründen dargestellt) des Basiskörpers (3) sind die Positionsmeßsysteme (5a, 5b) befestigt.

Die Positionsmeßsysteme (5a, 5b) arbeiten induktiv und reichen so nah wie möglich an die Unterseite der Kippkörpers (2) heran, welcher elektrisch leitend ausgestaltet ist. Der Abstand zwischen den Positionsmeßsystemen (5a, 5b) und der Unterseite des Kippkörpers 82) ist dabei so bemessen, daß der Kippkörper (2) störungsfrei seinen maximalen Kippwinkel in jeder der beiden Kippachsen auch gleichzeitig einnehmen kann.

Die Malterungseinrichtung (7) ist als Zylinderstab ausgeführt und befindet sich zentral unterhalb des Schwerpunktes des Kippkörpers (2).

Die plattenförmigen Verbindungskörper (6a, 6b; 6c, 6d) sind als dünne Platten ausgeführt, welche eine hohe Steifigkeit in Schiebe-, bzw. Druckrichtung aufweisen. Da sich die Verbindungskörper (6a, 6b; 6c, 6d) aber bei der Erzeugung der Drehpunkte (8, 9) bei einer Bewegung des jeweils anderen Verbindungskörpers (6a, 6b; 6c, 6d) auch in sich verdrehen müssen, besitzen sie zwischen der Halterungsvorrichtung (7) des Kippkörpers (2) und den mit ihnen fest verbundenen Enden der Piezoaktuatoren (4a, 4b, 4c, 4d) zu beiden Seiten eine Materialverjüngung (d.h. sie sind dort eingeschnitten, wie dies sehr gut in der Figur 2 zu sehen ist), so daß sie als Festkörpergelenk wirken. Es ist wichtig, daß die Dicke der Verbindungskörper (6a, 6b; 6c, 6d) einerseits nicht zu groß ist, um die Verdrehgelenkigkeit der Verbindungskörper (6a, 6b; 6c, 6d) sicherzustellen, und daß aus dem selben Grund die seitlichen Materialverjüngungen genügend groß sind. Andererseits dürfen beide Größen nicht unterdimensioniert werden, um die Kraftübertragung zwischen Piezoaktuatoren (4a, 4b, 4c, 4d) und Halterungsvorrichtung (7) nicht zu behindern.

## Patentansprüche

1. Kippvorrichtung (1), welche eine Kippung um erste und eine zweite Achse ermöglicht, mit
- einem Kippkörper (2),
- einem Basiskörper (3),
- einer länglichen Halterungsvorrichtung (7) unterhalb des Kippkörpers (3), die eine longitudinale Achse definiert,
- einem ersten und einem zweiten rechteckförmigen Stabilisierungskörper (4a, 4b, 4c, 4d), die an dem Basiskörper (3) angebracht sind,
- einem ersten Verbindungskörper (6a, 6b,) zwischen der Halterungsvorrichtung (7) und dem ersten Stabilisierungskörper (4a, 4b), welcher in einer ersten Position in Richtung der longitudinalen Achse an der Halterungsvorrichtung (7) angreift,
- einem zweiten Verbindungskörper (6c, 6d,) zwischen der Halterungsvorrichtung (7) und dem zweiten Stabilisierungskörper (4c, 4d), welcher in einer zweiten, von der ersten Position abweichenden Position in Richtung der longitudinalen Achse an der Halterungsvorrichtung (7) angreift,
**dadurch gekennzeichnet,**
- **daß** die Verbindungskörper (6a, 6b, 6c, 6d) plattenförmig sind und zwischen der Halterungsvorrichtung (7) und den Stabilisierungskörpern (4a, 4b, 4c, 4d) verdünnt ausgebildet sind,
- wobei der erste Verbindungskörper (6a, 6b) steif in einer ersten zur longitudinalen Achse senkrechten Richtung und der zweite Verbindungskörper (6c, 6d) steif in einer zweiten, zur longitudinalen Richtung und zur ersten Richtung senkrechten Richtung ist.

2. Kippvorrichtung nach Anspruch 1, wobei der erste Verbindungskörper (6a, 6b) eine Kippachse in der zweiten Richtung definiert, wenn der zweite Stabilisierungskörper (4c, 4d) zur Kippung des Kippkörpers (2) bewegt wird und daß der zweite Verbindungskörper (6c, 6d) eine Kippachse in der ersten Richtung definiert, wenn der erste Stabilisierungskörper (4a, 4b) zur Kippung des Kippkörpers (2) bewegt wird.

3. Kippvorrichtung nach einem der Ansprüche 1-2, wobei zumindest zwei der rechteckförmigen Stabilisierungskörper (4a, 4b, 4c, 4d) zueinander in einem Winkel von 90° angeordnet sind.

4. Kippvorrichtung nach Anspruch 3, wobei daß zwei weitere rechteckförmige Stabilisierungskörper (4a, 4b, 4c, 4d) zueinander in einem Winkel von 90° angeordnet sind, so daß zwei erste Stabilisierungskörper (4a, 4b) in einem Winkel von 90° zu zwei zweiten Stabilisierungskörpern (4c, 4d) angeordnet sind.

5. Kippvorrichtung nach Anspruch 4, wobei jeweils zwei einander gegenüberliegende Stabilisierungskörper (4a, 4b, 4c, 4d) durch die Verbindungskörper (6a, 6b, 6c, 6d) bewegungsmäßig gekoppelt sind und daß die sich gegenüberstehenden Stabilisierungskörper (4a, 4b, 4c, 4d) in gleicher Höhe an der Halterungsvorrichtung (7) über die Verbindungskörper (6a, 6b, 6c, 6d) befestigt sind.

6. Kippvorrichtung nach einem der Ansprüche 1-4, wobei die Stabilisierungskörper (4a, 4b, 4c, 4d) Biegeaktuatoren sind.

7. Kippvorrichtung nach einem der Ansprüche 1-4, wobei die Stabilisierungskörper (4a, 4b, 4c, 4d) Piezo-Aktuatoren sind.

8. Kippvorrichtung nach einem der Ansprüche 1-4, wobei auf dem Basiskörper (3) zumindest ein vertikaler Steg (3.1) bis unter den Kippkörper (2) angebracht ist und daß für mindestens eine Kippachse ein Positionsmeßsystem (5a) auf diesem Steg (3.1) angebracht ist.

9. Kippvorrichtung nach Anspruch 8, wobei das Positionsmeßsystem (5a) ein induktiv arbeitendes Positionsmeßsystem ist.

## Claims

1. Tilting device (1) which permits tilting about a first and a second axis, comprising
- a tilting element (2),
- a basic element (3),
- an elongated holding device (7), underneath the tilting element (2), which defines a longitudinal axis,
- a first and a second rectangular stabilization element (4a, 4b, 4c, 4d), which are fitted to the basic element (3),
- a first connecting element (6a, 6b) between the holding device (7) and the first stabilization element (4a, 4b), which, in a first position, acts on the holding device (7) in the direction of the longitudinal axis,
- a second connecting element (6c, 6d) between the holding device (7) and the second stabilization element (4c, 4d), which, in a second position differing from the first position, acts on the holding device (7) in the direction of the longitudinal axis,
**characterized**
- **in that** the connecting elements (6a, 6b, 6c, 6d) are plate-like and are designed to be thinned between the holding device (7) and the stabilization elements (4a, 4b, 4c, 4d),
- the first connecting element (6a, 6b) being rigid in a first direction at right angles to the longitudinal axis, and the second connecting element (6c, 6d) being rigid in a second direction at right angles to the longitudinal direction and to the first direction.

2. Tilting device according to Claim 1, the first connecting element (6a, 6b) defining a tilt axis in the second direction when the second stabilization element (4c, 4d) is moved in order to tilt the tilting elements, and the second connecting element (6c, 6d) defining a tilt axis in the first direction when the first stabilization element (4a, 4b) is moved in order to tilt the tilting element (2).

3. Tilting device according to one of Claims 1 - 2, at least two of the rectangular stabilization elements (4a, 4b, 4c, 4d) being arranged at an angle of 90° in relation to one another.

4. Tilting device according to Claim 3, two further rectangular stabilization elements (4a, 4b, 4c, 4d) being arranged at an angle of 90° in relation to one another, so that two first stabilization elements (4a, 4b) are arranged at an angle of 90° with respect to two second stabilization elements (4c, 4d).

5. Tilting device according to Claim 4, in each case two mutually opposite stabilization elements (4a, 4b, 4c, 4d) being coupled in terms of movement by the connecting elements (6a, 6b, 6c, 6d), and the mutually opposite stabilization elements (4a, 4b, 4c, 4d) being fixed at the same height to the holding device (7) via the connecting elements (6a, 6b, 6c, 6d).

6. Tilting device according to one of Claims 1 - 4, the stabilization elements (4a, 4b, 4c, 4d) being bending actuators.

7. Tilting device according to one of Claims 1 - 4, the stabilization elements (4a, 4b, 4c, 4d) being piezoelectric actuators.

8. Tilting device according to one of Claims 1 - 4, at least one vertical web (3.1) being fitted to the basic element (3) until under the tilting element (2), and, for at least one tilt axis, a position-measuring system (5a) being fitted to this web (3.1).

9. Tilting device according to Claim 8, the position-measuring system (5a) being a position-measuring system that operates inductively.

## Revendications

1. Dispositif de basculement (1) qui permet un basculement autour d'un premier et d'un deuxième axe, comportant
- un corps basculant (2),
- un corps de base (3),
- un dispositif de maintien longitudinal (7), qui définit un axe longitudinal, en dessous du corps basculant (2),
- un premier et un deuxième corps de stabilisation de forme rectangulaire (4a, 4b, 4c, 4d), qui sont disposés sur le corps de base (3),
- un premier corps de liaison (6a, 6b) entre le dispositif de maintien (7) et le premier corps de stabilisation (4a, 4b), qui s'engrène, dans une première position, dans le sens de l'axe longitudinal sur le dispositif de maintien (7),
- un deuxième corps de liaison (6c, 6d) entre le dispositif de maintien (7) et le deuxième corps de stabilisation (4c, 4d), qui s'engrène, dans une deuxième position divergente de la première position, dans le sens de l'axe longitudinal sur le dispositif de maintien (7),
**caractérisé en ce que**
- les corps de liaison (6a, 6b, 6c, 6d) sont configurés en forme de plaques et amincis entre le dispositif de maintien (7) et les corps de stabilisation (4a, 4b, 4c, 4d),
- le premier corps de liaison (6a, 6b) étant rigide dans un premier sens perpendiculaire à l'axe longitudinal et le deuxième corps de liaison (6c, 6d) étant rigide dans un deuxième sens perpendiculaire au sens longitudinal et au premier sens.

2. Dispositif de basculement selon la revendication 1, le premier corps de liaison (6a, 6b) définissant un axe de basculement dans le deuxième sens lorsque le deuxième corps de stabilisation (4c, 4d) est bougé pour faire basculer le corps basculant (2), et le deuxième corps de liaison (6c, 6d) définissant un axe de basculement dans le premier sens lorsque le premier corps de stabilisation (4a, 4b) est bougé pour faire basculer le corps basculant (2).

3. Dispositif de basculement selon l'une quelconque des revendications 1 à 2, au moins deux des corps de stabilisation de forme rectangulaire (4a, 4b, 4c, 4d) étant disposés en angle de 90° l'un par rapport à l'autre.

4. Dispositif de basculement selon la revendication 3, deux autres corps de stabilisation de forme rectangulaire (4a, 4b, 4c, 4d) étant disposés en angle de 90° l'un par rapport à l'autre, de sorte que deux premiers corps de stabilisation (4a, 4b) sont disposés en angle de 90° par rapport à deux deuxièmes corps de stabilisation (4c, 4d).

5. Dispositif de basculement selon la revendication 4, deux corps de stabilisation opposés (4a, 4b, 4c, 4d) étant respectivement accouplés par un mouvement par les corps de liaison (6a, 6b, 6c, 6d) et les corps de stabilisation opposés (4a, 4b, 4c, 4d) étant fixés à la même hauteur sur le dispositif de maintien (7) par l'intermédiaire des corps de liaison (6a, 6b, 6c, 6d).

6. Dispositif de basculement selon l'une quelconque des revendications 1 à 4, les corps de stabilisation (4a, 4b, 4c, 4d) étant des actionneurs à flexion.

7. Dispositif de basculement selon l'une quelconque des revendications 1 à 4, les corps de stabilisation (4a, 4b, 4c, 4d) étant des piézo-actionneurs.

8. Dispositif de basculement selon l'une quelconque des revendications 1 à 4, au moins une traverse verticale (3.1) étant disposée sur le corps de base (3) jusqu'en dessous du corps basculant (2) et, pour au moins un axe de basculement, un système de mesure de position (5a) étant installé sur cette traverse (3.1).

9. Dispositif de basculement selon la revendication 8, le système de mesure de position (5a) étant un système de mesure de position fonctionnant par induction.
